# EUROPÄISCHE PATENTSCHRIFT

(11) **EP 0 244 358 B1**
(45) Veröffentlichungstag und Bekanntmachung des Hinweises auf die Patenterteilung: **24.02.1993**
(21) Anmeldenummer: 87810257.3
(22) Anmeldetag: 23.04.1987
(51) Int. Cl.: B23Q 11/00, B23D 59/00, B27B 5/06

(54) **Verfahren zum Absaugen des bei vertikalen Plattensägen anfallenden Holzstaubes**
Wood chips sucking method at vertical panel sawing machines
Procédé pour aspirer les copeaux de bois dans les machines verticales à scier des panneaux

(30) Priorität: 25.04.1986 CH 1702/86
(43) Veröffentlichungstag der Anmeldung: 04.11.1987
(73) Patentinhaber: Striebig AG, CH-6014 Littau (CH)
(72) Erfinder: Striebig, Ludwig, CH-6005 Luzern (CH)
(74) Vertreter: Eschmann, Heinz

(56) Entgegenhaltungen:
- FR-A- 2 537 485
- GB-A- 2 029 286
- GB-A- 2 139 556

## Beschreibung

Beim Sägen von Platten aus Holz, d.h. Span- oder Massivholzplatten, fallen bekanntlich nicht nur Sägespäne bzw. Sägemehl an, sondern auch ein gewisser Anteil feinsten Holzstaubes. Bei den bekannten Plattensägen, wie sie beispielsweise in der DE-PS Nr. 2.813.726 beschrieben sind, wird der im Schnittbereich vor der Platte anfallende Holzstaub zusammen mit den gröberen Spänen während des Schnittvorganges abgesaugt und fortgeführt. Dieser vor der Platte anfallende Anteil an Holzstaub und Sägespänen macht etwa 95 - 97 % der insgesamt anfallenden Menge aus. Die restlichen 3 - 5 %, die so gut wie ausschliesslich aus feinstem Holzstaub bestehen, werden von dem rotierenden Kreissägeblatt hinter die Platte geschleudert, wo sie sich in Tangentialrichtung vom Sägeblatt ablösen, in die Umgebung gelangen und somit nicht nur sich auf der Einrichtung des betreffenden Raumes absetzen, sondern vor allem für das arbeitende Personal ein erhebliches Gesundheitsrisiko darstellen.

Es ist dem Fachmann bekannt, dass bei den horizontal angeordneten Plattensägen die Ableitung des dort unter der Platte anfallenden Holzstaubs keine grossen Schwierigkeiten bereitet, da der Staub bei dieser Horizontalbauweise durch einen stationär angeordneten Kanal abgesaugt werden kann.

Bei der vertikalen Plattensäge liegen jedoch bekanntlich durchaus verschiedene konstruktive und funktionelle Bedingungen vor, welche die Absaugung des Holzstaubes hinter der Platte bisher als äusserst schwierig, wenn nicht gar als unmöglich erscheinen liessen. Da das Sägeaggregat bei Vertikalbauweise an einem beweglichen Balken angeordnet ist, kann von der Anordnung eines ortsfesten Absaugekanals nicht die Rede sein. Ein mit dem Sägebalken mitgeführter Absaugekanal lässt sich aber in Anbetracht des den Plattenstützrost tragenden Gestells ebenfalls nicht realisieren.

Aus diesem Grunde ist es bei vertikalen Plattensägen zwar relativ einfach, die vor der Platte anfallende Menge von Holzstaub und Sägemehl abzusaugen; die restlichen, hinter der Platte anfallenden 3 - 5% des Holzstaubes wurden jedoch bisher - aus den erwähnten Schwierigkeiten heraus - gar nicht oder nur mit in Konstruktion und Bedienung aufwendigen Vorrichtungen erfasst.

So wird z.B. in der US-PS 4 150 597 keinerlei Lösung zum Absaugen dieses, bei vertikalen Plattensägen, problematischen rückseitigen Holzstaubanteils angeboten.

Die GB-A-2 139 556 zeigt eine Möglichkeit der Staubabsaugung bei der Ausführung von Horizontalschnitten; dabei wird der Sägestaub in einen horizontal angeordneten, in vertikaler Richtung verschiebbaren Kanal geschleudert und von diesem abgesaugt. Dieses Prinzip lässt sich auf Vertikalschnitte aber nicht anwenden, weswegen in der gleichen GB-Anmeldung auch eine Lösung für die Staubabsaugung beim Vertikalschnitt angeboten wird. Demgemäss ist ein Hilfsrahmen vorgesehen, welcher ein vertikales Absaugprofil trägt, in dessen Schlitz das Sägeblatt beim Schnitt hineinragt. Die Realisierung dieser Lösung hat sich als komnpliziert erwiesen, da der fahrbare Hilfsrahmen sehr exakt in die jeweilige Schnittposititon gefahren und in dieser in Abhängigkeit von der Lage des Sägeblattes verankert werden muss, was einen grossen zusätzlichen Aufwand mit sich bringt. Dieses Dokument stellt den nächstkommenden Stand der Technik dar.

Es ist daher die Aufgabe der vorliegenden Erfindung, ein Verfahren und eine Plattensäge vorzuschlagen, welche bei der Anbringung von Horizontalschnitten eine unkomplizierte und dennoch einwandfrei arbeitende Absaugung des hinter der Platte anfallenden Holzstaubes gewährleisten. Dieses Verfahren ist im unabhängigen Patentanspruch 1, die zugehörige Plattensäge im Patentanspruch 2 definiert.

Nachstehend wird anhand der beiliegenden Zeichnung ein Ausführungsbeispiel einer erfindungsgemässen Plattensäge beschrieben.
Fig. 1 ist eine Frontansicht einer Ausführungsform der erfindungsgemässen Plattensäge mit eingerollter Abdichtfolie,
Fig. 2 zeigt die gleiche Plattensäge, ebenfalls in Frontansicht, während der Anbringung eines Horizontalschnittes,
Fig. 3 veranschaulicht schematisch eine Möglichkeit, wie die Abdichtfolie in Richtung der Platte vorgespannt werden kann,
Fig. 4 zeigt perspektivisch einen Ausschnitt im Bereich der zu zersägenden Platte,
Fig. 5 zeigt perspektivisch einen Ausschnitt in dem von der Abdichtfolie überdeckten Absaugebereich,
Fig. 6 und 7 sind perspektivische Detailansichten im Bereich der Plattenkante und die
Fig. 8 bis 10 veranschaulichen die Führung der Abdichtfolie und die
Fig. 11 bis 13 sind schematische Darstellungen eines Ausführungsdetails im Zusammenhang mit drei aufeinanderfolgenden Phasen des Sägevorganges.

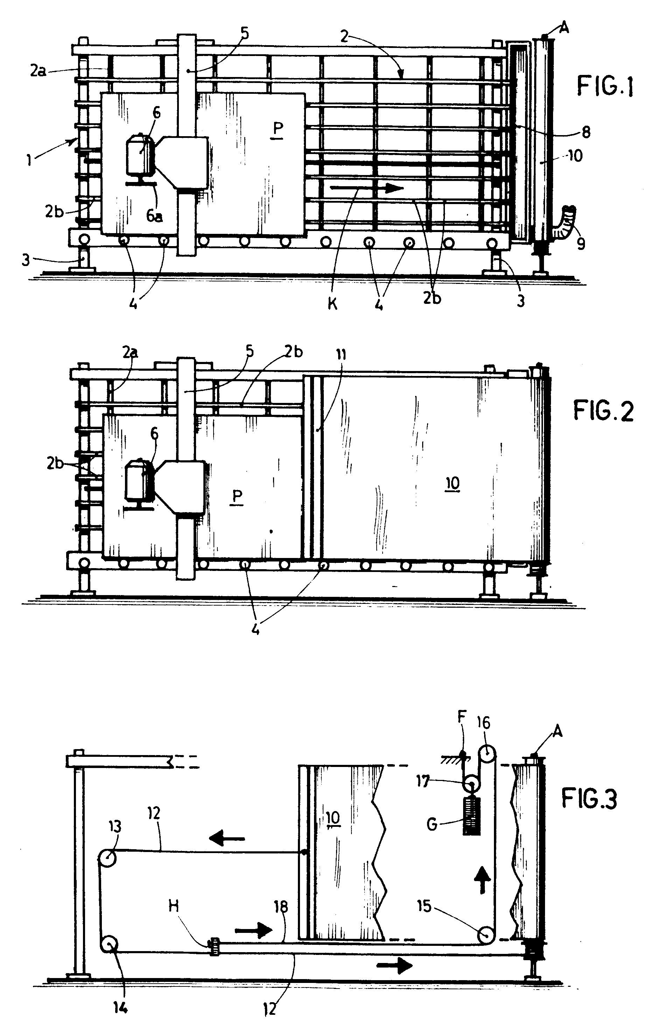

Die in Fig. 1 bis 3 vereinfacht dargestellte Plattensäge weist ein aufrecht stehendes Gestell 1 auf, das einen Stützrost 2 aus vertikalen Leisten 2a und horizontalen Leisten 2b trägt. Das Gestell 1, das sich über Füsse 3 auf den Werkstattboden abstützt, trägt in seinem unteren Bereich mehrere lose drehbar gelagerte Tragrollen 4, auf welchen die zu zersägende Platte P abgestellt und mit geringem Kraftaufwand seitlich verschoben werden kann.

Am Gestell 1 ist ferner ein vertikaler Sägebalken 5 seitlich verschiebbar gelagert, der das schwenkbare Sägeaggregat 6 trägt. Weitere Einzelheiten einer solchen Plattensäge, die aber zum Verständnis der vorliegenden Erfindung nicht erforderlich sind, können beispielsweise den CH-PS Nr. 617 119 und 621 083 entnommen werden.

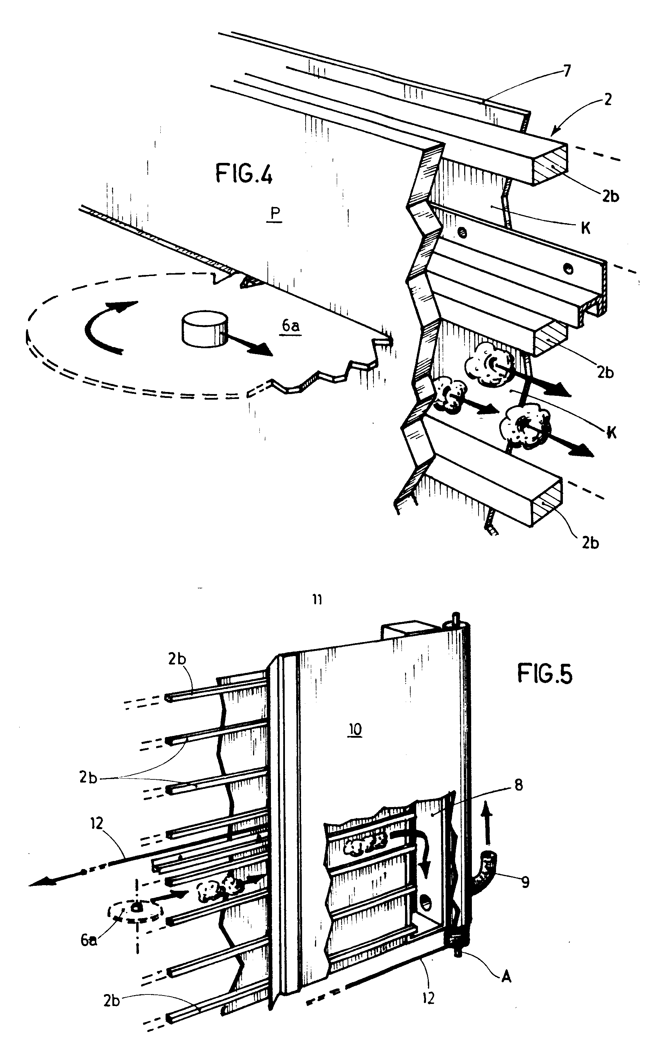

An der der Platte P abgewandten Seite ist der Stützrost 2 mit einer ortsfest an demselben verankerten, z.B. verschraubten Abdeckplatte 7 (vgl. Fig. 4) versehen, so dass zwischen dieser Abdeckplatte 7, der zu zersägenden Platte P und den horizontalen Abstützrostleisten 2b eine Reihe paralleler, allseitig umschlossener Kanäle K (Fig. 4) gebildet werden. Sämtliche Kanäle K münden in einen vertikalen Sammelkanal 8, welcher über eine Leitung 9 an ein Sauggebläse angeschlossen ist. Die parallelen, übereinanderliegenden Kanäle K sind auf der dem Sammelkanal 8 gegenüberliegenden Schmalseite geschlossen, so dass praktisch sämtlicher in dieselben gelangender Holzstaub in Pfeilrichtung (Fig. 4) durch den Sammelkanal 8 abgesaugt werden kann.

Bei der in Fig. 1 gezeigten Anordnung wäre die Absaugung über den Sammelkanal 8 allerdings wirkungslos, da die Kanäle K dort im Zwischenraum zwischen der Platte P und dem Sammelkanal 8 offen sind. Um diese offene Stelle abzudichten, ist neben dem Sammelkanal 8 eine Abdichtfolie 10 angeordnet, welche sich über die gesamte Höhe des Stützrostes 2 erstreckt und gemäss Fig. 1 auf einer drehbar gelagerten Achse 8 zu einer aufrecht stehenden Rolle aufgerollt ist. Um nun ein sicheres Anliegen an jeder beliebigen Platte P zu erzielen, ist die Abdichtfolie 10 in Richtung auf die Platte P einer Vorspannung bzw. einer ständig wirkenden Zugkraft ausgesetzt, so dass das vordere Folienende - wie Fig. 2 zeigt - ständig an der ihm benachbarten Plattenkante anliegt. Dadurch sind die Absaugkanäle K auf ihrer gesamten, für die Holzstaubabsaugung erforderlichen Länge geschlossen.

Die erwähnte Vorspannung bzw. ständige Zugwirkung, welche das Anliegen der Abdichtfolie 10 an der Plattenkante gewährleistet, kann auf unterschiedliche Weise erreicht werden. Am besten dürfte sich eine Gegengewichtsanordnung bewähren, die nachstehend anhand von Fig. 3 beschrieben wird.

Am vorderen Ende der Abdichtfolie 10, das durch eine starre Abdichtkonstruktion 11 gebildet wird, ist ein Zugseil 12 befestigt, das über Umlenkrollen 13 und 14 zur Achse A der Abdichtfolie 10 geführt ist, sich von dieser Achse A abwickeln lässt und durch eine an der genannten Achse A angreifende Feder wieder aufgewickelt wird. Am Zugseil 12 greift ein Hilfsseil 18 an (Angriffsstelle H), das über Umlenkrollen 15, 16 und 17 geführt, am Gestell (Fixpunkt F) verankert und durch ein Gewicht G belastet ist. Wie Fig. 3 zeigt, bewirkt das Gewicht G, dass die Abdichtfolie 10 ständig in Pfeilrichtung gegen die hier nicht gezeigte Platte gezogen wird.

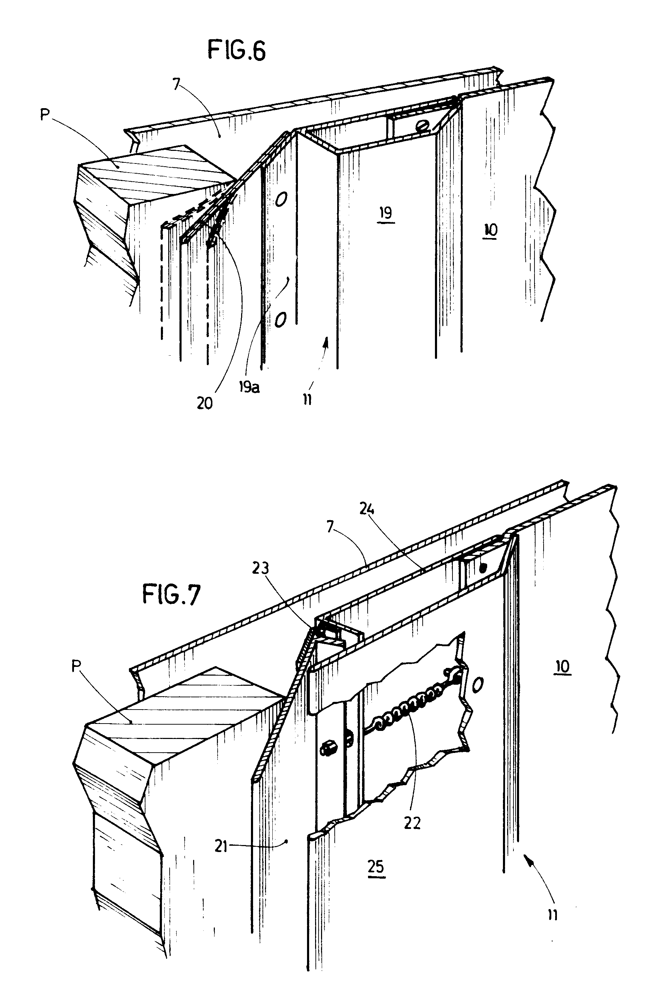

Fig. 4 und 5 zeigen, wie der tangential vom Kreissägeblatt 6a in den betreffenden Absaugekanal K abgeschleuderte Holzstaub zwischen der durch die Abdeckplatte 7 gebildeten Rückwand und der durch die zu zersägende Platte P und die Abdichtfolie 10 gebildeten Frontwand in den Sammelkanal 8 gelangt und von dort durch die Leitung 9 einem Sammelbehälter zugeführt werden kann.

Um eine möglichst einwandfreie Abdichtung an der Kontaktstelle zwischen Abdichtfolie 10 und Platte P zu erzielen, kann die Vorderkante der Abdichtfolie 10, welche an der benachbarten Plattenkante anliegen soll, beispielsweise gemäss Fig. 6 ausgebildet sein. An der flexiblen Folie 10, die aus einem luftundurchlässigen Material bestehen soll, ist die bereits erwähnte Abdichtkonstruktion 11 befestigt, welche ein starres, metallisches Profil 19 aufweist, an dessen geneigtem Steg 19a eine flexible Abdichtlippe 20 angeordnet ist. Die Abdichtlippe passt sich selbsttätig den unterschiedlichen Plattendicken an.

Bei der Ausführung nach Fig. 7 ist eine starre Abdichtlippe 21 gewählt, welche L-förmig ausgebildet ist und an deren schmälerem Schenkel eine Druckfeder 22 angreift. Die mittels Scharnier 23 an einem Metallprofil 24 befestigte Abdichtlippe 21 wird somit durch die Druckfeder 22 zur Anlage an der benachbarten Plattenkante gebracht. Die Druckfeder 22 kann durch ein weiteres Profil 25 verdeckt sein.

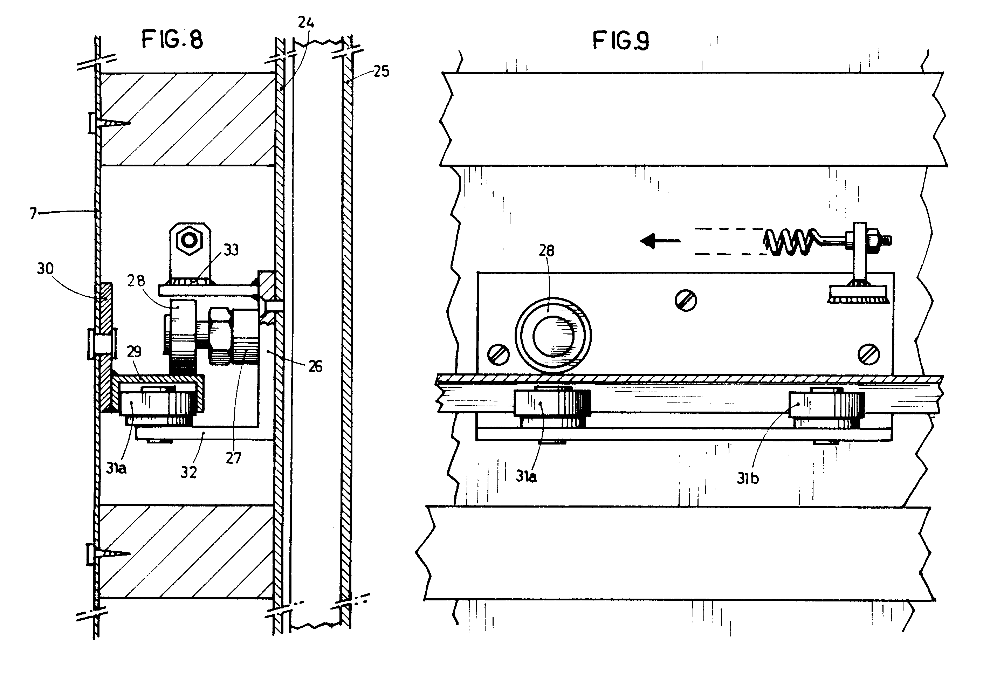

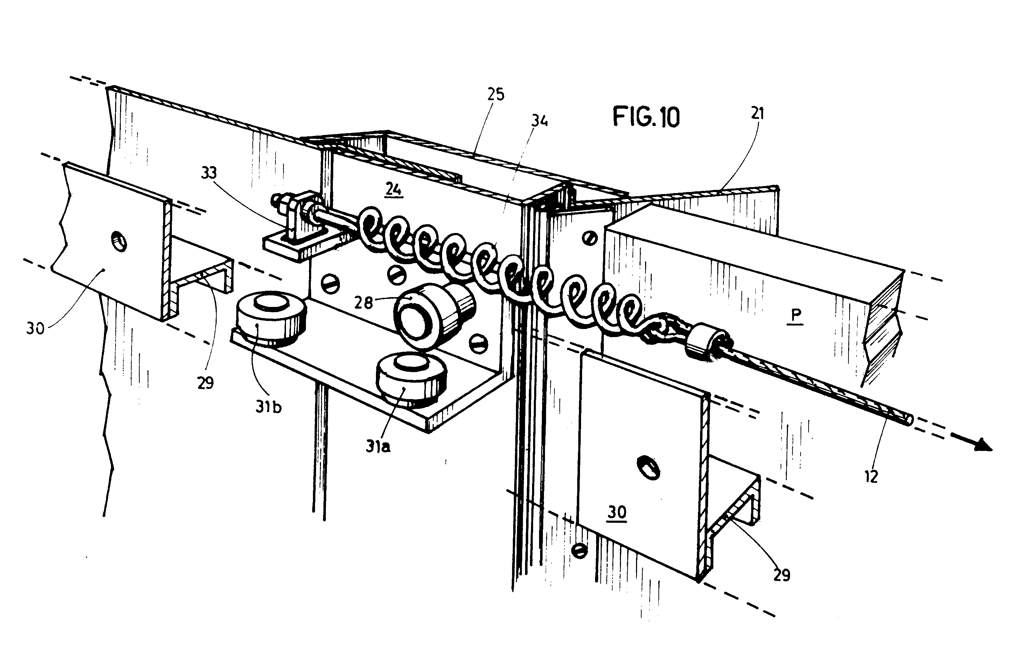

Die sich über die Gesamthöhe des Stützrostes 2 erstreckende Abdichtfolie 10 muss im Hinblick auf die erwünschte Abdichtung geführt sein, so dass sie einerseits auf ihrer gesamten Auszugslänge die richtige Höhe beibehält, andererseits auch möglichst nahe an den Leisten 2a/2b des Stützrostes 2 anliegt. Diesem Zweck dient die Führungsanordnung, welche in den Fig. 8, 9 und 10 dargestellt ist.

Im Bereich der Abdichtkonstruktion 11 der Abdichtfolie 10, wie sie in Fig. 7 dargestellt ist, ist an dem Profil 24 eine Platte 26 aufgenietet, welche an einem Tragarm 27 eine auf Kugellagern montierte Laufrolle 28 trägt. Diese rollt auf einer U-förmigen Schiene 29, welche über eine Platte 30 an der Abdeckplatte 7 befestigt ist. Die nach unten offene Schiene 29 dient gleichzeitig zur seitlichen Führung zweier, ebenfalls auf Kugellagern montierter Laufrollen 31a/31b, deren Tragarme 32 am Profil 24 befestigt sind. Auf diese Weise gewährleisten die obere Rolle 28 die Höhenlage und die unteren, mit seitlichem Spiel in der Schiene 29 geführten Rollen 31a/31b die exakte seitliche Führung der Abdeckfolie 10. Am Profil 24 ist ferner die Halterung 33 für das Zugseil 12 befestigt, das im Hinblick auf dessen Längenausgleich mit einer Zugfeder 34 versehen ist.

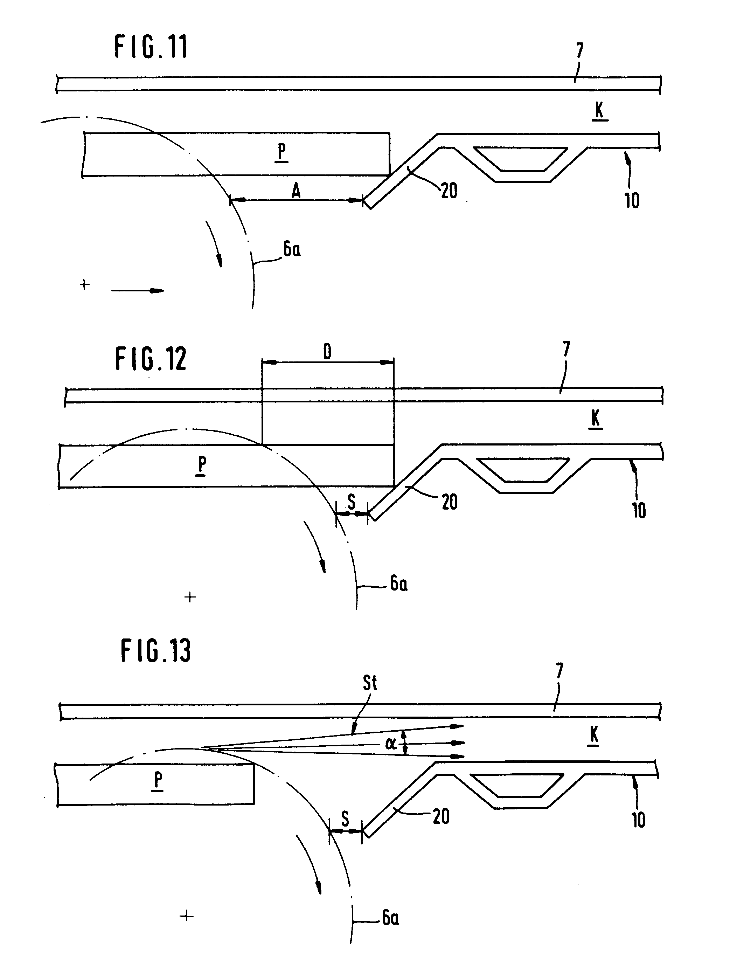

Die bisher beschriebene konstruktive Ausbildung der Plattensäge arbeitet befriedigend mit Ausnahme der jeweils letzten Phase des Sägevorganges, in welcher das Sägeblatt 6a unweigerlich in den Bereich der freien Kante 20 (Fig. 6) bzw. 21 (Fig. 7) der Abdichtwand 10 gerät und bei weiterem Vorschub des das Sägeaggregat tragenden Balkens 5 die Abdichtwand 10 beschädigen würde. Um dies mit Sicherheit zu verhindern, ist am Balken 5 ein Mitnehmerzapfen 35 (Fig. 2) angeordnet, der im gegebenen Moment - d.h. wenn sich das Sägeblatt 6a noch in einem bestimmten Mindest-Sicherheitsabstand von der Abdichtwand 10 befindet - auf deren freie Kante 20 bzw. 21 auftrifft. Die Vorschubbewegung des Balkens 5 wird damit auf die Abdichtwand 10 übertragen, so dass der Balken 5 in dieser letzten Phase des Sägevorganges die Abdichtwand 10 vor sich herschiebt. Der sich dabei abspielende Vorgang wird nun anhand der Fig. 11 bis 13 erläutert.

Die freie Kante der Abdichtwand 10 - also speziell die Abdichtlippe 20 (Fig. 6) bzw. 21 (Fig. 7) - liegt beim Sägevorgang nur dann an der ihr benachbarten Plattenkante an, solange sich das Sägeblatt 6a genügend weit links der Dichtlippe 20 befindet, d.h. solange A>S (siehe Fig. 11 und 12).

Bewegt sich das Sägeblatt 6a in seiner Vorschubrichtung weiter nach rechts, so reduziert sich der Abstand A, bis schliesslich ein Sicherheitsabstand S erreicht ist, der nicht unterschritten werden darf. Wie Fig. 12 zeigt, ist jedoch zu diesem Zeitpunkt die Platte P noch nicht vollständig aufgetrennt. Zu deren vollständigen Auftrennung muss sich das Sägeblatt noch mindestens um die Distanz D nach rechts bewegen. Damit dabei die Dichtlippe 20 bzw. 21 und weitere Elemente der Abdichtwand 10 nicht zersägt werden, wird ab dem in Fig. 12 dargestellten Zeitpunkt die Abdichtwand 10 durch den am Sägebalken befestigten Mitnehmer 35 dergestalt nach rechts geschoben, dass der Sicherheitsabstand S stets eingehalten wird. Wie aus Fig. 13 ersichtlich, öffnet sich dabei der aus den Elementen 7, 20 und 10 sowie der Platte P gebildete Absaugkanal K. Da jedoch der Oeffnungswinkel α des Staubpartikel-Strahles St viel kleiner ist, als der Oeffnungswinkel des aus den Elementen 7 und 20 gebildeten Auffangtrichters und da der Kanal K zusätzlich unter Unterdruck steht, geht kein Staub durch die Oeffnung zwischen Plattenkante und Dichtlippe verloren.

Die Wirkung der rückseitigen Absaugung ist somit auch während des Austritts des Sägeblattes aus der rechten Plattenkante garantiert. Bei Rücklauf des Sägeblattes wird die Abdichtwand 10 durch das Gegengewicht G (Fig. 3) zurückgezogen, bis die Dichtlippe 20 wieder an der rechten Plattenkante ansteht.

Die beschriebene Ausbildung der Plattensäge gewährleistet eine einwandfreie Absaugung des gesamten hinter der Platte P anfallenden Holzstaubes.

Im Rahmen des im unabhängigen Patentanspruch definierten Schutzbereiches kann die beschriebene Plattensäge vom Fachmann in vielfacher Weise abgewandelt werden. So könnte die Abdichtfolie 10 beispielsweise, falls genügend Platz vorhanden ist, auch durch eine starre Platte ersetzt werden.

Vorzugsweise wird die Abdichtfolie 10 in ihrer aufgerollten Endlage nach Fig. 1 durch eine nicht dargestellte, bekannte Arretierung gesichert.

## Patentansprüche

1. Verfahren zum Absaugen des an vertikalen Plattensägen hinter der Platte (P) bei der Anbringung von Horizontalschnitten anfallenden Holzstaubes, der in einen Absaugekanal (K) eingeleitet wird, wobei die zu zersägende Platte (P) auf einen praktisch vertikalen Stützrost (2) angelegt und durch horizontale Schnitte unterteilt wird, dadurch gekennzeichnet, dass zwischen der am Stützrost (2) anliegenden Fläche der Platte (P) und einer am Rost (2) befestigten rückseitigen Abdeckung (7) ein Kanal (K) gebildet wird, aus dem der tangential vom Sägeblatt (6a) abgeschleuderte Holzstaub abgesaugt wird.

2. Vertikale Plattensäge zur Durchführung des Verfahrens nach Anspruch 1, mit einem praktisch vertikalen Stützrost (2), welcher aus horizontal angeordneten gegenseitig parallelen Leisten (2b) gebildet ist und an dessen Frontseite ein vertikaler, seitlich verschiebbarer, ein Sägeaggregat (6) tragender Balken (5) angeordnet ist, und mit einem Absaugekanal, dadurch gekennzeichnet, dass
- die der Plattenauflageseite abgewandte Rückseite des Stützrostes (2) durch ein am Stützrost (2) ortsfest verankertes Abdeckelement (7) durchgängig geschlossen ist,
- die dadurch zwischen den paarweise einander benachbarten Rostleisten (2b) gebildeten Kanäle (K) an einen sämtliche Kanäle (K) verbindenden, vertikalen Abströmschacht (8) angeschlossen sind,
- an demjenigen Randabschnitt des Stützrostes (2), der in Horizontalschnittrichtung liegt, eine sich über die gesamte Stützrosthöhe erstreckende bewegliche Abdichtwand (10) angeordnet ist, welche in Richtung auf die zu zersägende Platte (P) vorgespannt ist,
- und dass Mittel (35) vorgesehen sind, um die freie Kante (20, 21) der Abdichtwand (10) bei Annäherung des Sägeaggregates (6) an dieselbe mit der Vorschubbewegung des genannten Balkens (5) zu koppeln,
das Ganze derart, dass die freie Kante (20, 21) der Abdichtwand (10) vom Beginn des Sägevorganges an an der ihr benachbarten Plattenkante anliegt und sich erst gegen Ende des Sägevorganges, d.h. bei Annäherung des Sägeblattes (6a) an die genannte freie Kante (20, 21) von der Plattenkante löst, derart, dass die genannten, zwischen dem Abdeckelement (7) einerseits und der Platte (P) mit der Abdichtwand (10) andererseits begrenzten Kanäle (K) bis zum Abströmschacht (8) mit Ausnahme der jeweiligen Endphase des Sägevorganges geschlossen sind.

3. Plattensäge nach Anspruch 2, dadurch gekennzeichnet, dass die Abdichtwand (10) eine biegsame, praktisch luftundurchlässige Folie ist, welche auf einer vertikalen Achse (A) aufrollbar ist und deren freie Kante über Zugglieder (12, 18) mit einem Gegengewicht (6) verbunden ist.

4. Plattensäge nach einem der Ansprüche 1 bis 3, dadurch gekennzeichnet, dass die freie, zur Anlage an der Platte (P) bestimmte Kante der Abdichtwand (10) eine sich über deren Gesamthöhe erstreckende Abdichtkonstruktion (11) aufweist.

5. Plattensäge nach Anspruch 4, dadurch gekennzeichnet, dass die Abdichtkonstruktion (11) eine flexible Dichtlippe (20) besitzt.

6. Plattensäge nach Anspruch 4, dadurch gekennzeichnet, dass die Abdichtkonstruktion (11) eine starre Dichtlippe (21) besitzt, welche durch ein Scharnier (23) an der Abdichtkonstruktion (11) befestigt ist und durch eine Druckfeder (22) in Richtung der ihr benachbarten Plattenkante gedrückt wird.

7. Plattensäge nach einem der Ansprüche 1 bis 6, dadurch gekennzeichnet, dass an der Abdichtwand (10) und/oder an deren frontseitiger Abdichtkonstruktion (11) mindestens zwei lose drehbar gelagerte Laufrollen (28, 31a, 31b) angeordnet sind, welche an einer ortsfest am Gestell (1) befestigten Führungsschiene (29) geführt sind und damit die exakte Höhenlage und seitliche Führung der Abdichtwand (10) gewährleisten.

8. Plattensäge nach Anspruch 7, dadurch gekennzeichnet, dass die Führungsschiene ein nach unten offenes U-Profil (29) ist, dessen Oberseite als Abstützung für eine Laufrolle (28) dient, während mindestens eine weitere Laufrolle (31a, 31b) von unten in das U-Profil (29) hineinragt.

9. Plattensäge nach einem der Ansprüche 1 bis 8, dadurch gekennzeichnet, dass die genannten Mittel (35) einen am Balken (5) befestigten Mitnehmerzapfen umfassen.

## Claims

1. Process for sucking up the saw dust produced behind the panel (P) of a vertical panel sawing machine when producing horizontal cuts, the saw dust being conveyed into a suction channel (K), whilst the panel (P) to be sawn is placed on a substantially vertical support grid (2) and is sub-divided by horizontal cuts, characterised in that, between the surface of the panel (P) resting on the support grid (2) and a rearward cover (7) secured to the grid (2) a channel (K) is formed from which the saw dust flung tangentially outwards by the saw blade (6a) is sucked out.

2. Vertical panel sawing machine for performing the process according to claim 1, having a substantially vertical support grid (2) formed from horizontally arranged mutually parallel strips (2b), whilst on the front thereof is mounted a vertical, laterally movable beam (5) carrying a sawing assembly (6), and having a suction channel, characterised in that
- the back of the support grid (2) remote from the panel support side is closed off by a covering element (7) which is fixed in position on the support grid (2),
- the channels (K) thus formed between the grid strips (2b) arranged in adjacent pairs are attached to a vertical down-flow shaft (8) which connects all the channels (K),
- mounted on the edge portion of the support grid (2) which is situated in the direction of horizontal cutting is a movable sealing wall (10) extending over the full height of the support grid, said sealing wall (10) being biased towards the panel (P) which is to be sawn,
- and that means (35) are provided for coupling the free edge (20,21) of the sealing wall to the movement of advance of the said beam (5) as the sawing assembly (6) approaches the sealing wall (10),
- all this in such a way that the free edge (20,21) of the sealing wall (10) abuts on the panel edge adjacent to it right from the start of the sawing operation and does not free itself from the panel edge until nearly the end of the sawing operation, ie. as the saw blade (6a) approaches the said free edge (20,21), so that the above-mentioned channels (K) defined between the covering element (7) on the one hand and the panel (P) with the sealing wall (10) on the other hand are closed off up to the down-flow shaft (8), except during the relevant end phase of the sawing operation.

3. Panel sawing machine according to claim 2, characterised in that the sealing wall (10) is a flexible film which is substantially impervious to air and which can be rolled up on a vertical axis (A) and the free edge of which is connected to a counter weight (6) by means of tension members (12,18).

4. Panel sawing machine according to one of claims 1 to 3, characterised in that the free edge of the sealing wall (10) intended to abut on the panel (P) has a sealing construction (11) which extends over its full height.

5. Panel sawing machine according to claim 4, characterised in that the sealing construction (11) has a flexible sealing lip (20).

6. Panel sawing machine according to claim 4, characterised in that the sealing construction (11) has a rigid sealing lip (21) secured to the sealing construction (11) by a hinge (23) and pressed, by a compression spring (22), towards the adjacent edge of the panel.

7. Panel sawing machine according to one of claims 1 to 6, characterised in that mounted on the sealing wall (10) and/or on the sealing construction (11) on its front are at least two rollers (28,31a,31b) mounted so as to be loosely rotatable, these rollers being guided on a guide rail (29) firmly secured to the frame (1) and thereby ensuring the exact vertical position and lateral guiding of the sealing wall (10).

8. Panel sawing machine according to claim 7, characterised in that the guide rail has a U-shaped profile (29) opening downwardly, the top of which serves as a support for a roller (28), whilst at least one additional roller (31a,31b) projects into the U-shaped profile (29) from below.

9. Panel sawing machine according to one of claims 1 to 8, characterised in that said means (35) comprise a tang fixed to the beam (5).

## Revendications

1. Procédé pour aspirer la sciure de bois produite sur des machines verticales à scier des panneaux, derrière le panneau (P), lors de l'exécution de coupes horizontales, la sciure étant admise dans un canal d'aspiration (K) et le panneau à scier (P) étant posé contre une grille d'appui (2) pratiquement verticale et étant divisé par des coupes horizontales, caractérisé en ce qu'entre la surface du panneau (P) appliquée contre la grille d'appui (2) et un parement dorsal (7) fixé à la grille est formé un canal (K) hors duquel est aspirée la sciure fine projetée tangentiellement par la lame de scie (6a).

2. Machine verticale à scier des panneaux pour la réalisation du procédé suivant la revendication 1, comportant une grille d'appui pratiquement verticale (2), qui est formée de barres mutuellement parallèles (2b) disposées horizontalement et sur la face antérieure de laquelle est montée une poutre verticale (5), déplaçable latéralement, portant un dispositif de sciage (6), et un canal d'aspiration, caractérisée en ce que
- la face postérieure de la grille d'appui (2) opposée à la face d'appui pour le panneau est fermée de manière continue par un élément de parement (7) fixé à demeure à la grille d'appui (2),
- les canaux (K) ainsi formés entre les barres (2b) de la grille, voisines par paires, sont raccordés à un conduit d'évacuation vertical (8) qui communique avec tous les canaux (K),
- sur les bords de la grille d'appui (2) qui s'étendent dans le sens de sciage horizontal est montée une paroi d'étanchéité mobile (10) qui s'étend sur toute la hauteur de la grille d'appui et qui est présollicitée en direction du panneau (P) à scier,
- et des moyens (35) sont prévus pour accoupler au mouvement d'avancement de la poutre (5) le bord libre (20, 21) de la paroi d'étanchéité (10), lorsque le dispositif de sciage (6) se rapproche de celui-ci,
tant et si bien que le bord libre (20, 21) de la paroi d'étanchéité (10) est appliqué, depuis le début de l'opération de sciage, contre le bord voisin du panneau et ne se dégage du bord du panneau qu'à l'approche de la fin de l'opération de sciage, c'est-à-dire lorsque la lame de scie (6a) s'approche dudit bord libre (20, 21), de telle sorte que les canaux (K) délimités entre l'élément de parement (7), d'une part, et le panneau avec la paroi d'étanchéité (10), d'autre part, sont fermés jusqu'au conduit d'évacuation (8), sauf pendant la phase terminale de l'opération de sciage.

3. Machine à scier des panneaux suivant la revendication 2, caractérisée en ce que la paroi d'étanchéité (10) est une feuille mince, flexible, pratiquement imperméable à l'air, qui peut être enroulée sur un axe vertical (A) et dont le bord libre est relié par des organes de traction (12, 18) à un contrepoids (G).

4. Machine à scier des panneaux suivant l'une quelconque des revendications 1 à 3, caractérisée en ce que le bord libre de la paroi d'étanchéité (10) destiné à venir en contact avec le panneau (P) présente une structure d'étanchéité (11) qui s'étend sur toute sa hauteur.

5. Machine à scier des panneaux suivant la revendication 4, caractérisée en ce que la structure d'étanchéité (11) possède une lèvre d'étanchéité flexible (20).

6. Machine à scier des panneaux suivant la revendication 4, caractérisée en ce que la structure d'étanchéité (11) comporte une lèvre d'étanchéité rigide (21) qui est fixée par une charnière (23) à la structure d'étanchéité (11) et est pressée par un ressort de pression (22) en direction du bord voisin du panneau.

7. Machine à scier des panneaux suivant l'une quelconque des revendications 1 à 6, caractérisée en ce qu'au moins deux galets de roulement (28, 31a, 31b) montés fous sont prévus sur la paroi d'étanchéité (10) et/ou sur sa structure d'étanchéité antérieure (11) et roulent sur un rail de guidage (29) fixé à demeure au bâti (1), garantissant ainsi la position en hauteur et le guidage latéral exacts de la paroi d'étanchéité.

8. Machine à scier des panneaux suivant la revendication 7, caractérisée en ce que le rail de guidage est un profilé en U (29) ouvert vers le bas, dont la face supérieure sert de support pour un galet de roulement (28) tandis qu'au moins un autre galet de roulement (31a, 31b) s'engage par le bas dans ce profilé en U (29).

9. Machine à scier des panneaux suivant l'une quelconque des revendications 1 à 8, caractérisée en ce que les moyens (35) comprennent un doigt entraîneur fixé à la poutre (5).
